# EUROPÄISCHE PATENTSCHRIFT

(11) **EP 0 697 585 B1**
(45) Veröffentlichungstag und Bekanntmachung des Hinweises auf die Patenterteilung: **22.09.1999**
(21) Anmeldenummer: 95890128.2
(22) Anmeldetag: 03.07.1995
(51) Int. Cl.: G01L 3/22, G01L 3/16

(54) **Elektrische Motorbremsvorrichtung**
Electric dynamo meter
Dynamomètre électrique

(30) Priorität: 18.08.1994 AT 25094
(43) Veröffentlichungstag der Anmeldung: 21.02.1996
(73) Patentinhaber: AVL List GmbH, 8020 Graz (AT)
(72) Erfinder: Melde-Tuczai, Helmut, Dipl.-Ing., A-8010 Graz (AT)
(74) Vertreter: Krause, Walter, Dr. Dipl.-Ing.

(56) Entgegenhaltungen:
- DE-A- 2 059 684

## Beschreibung

Die Erfindung betrifft eine elektrische Motorbremsvorrichtung zur Messung des Drehmomentes einer Kraftmaschine mit einem mit einer Welle umlaufenden Rotor und einem Stator, welcher an seinen beiden jeweils einen scheibenförmigen Lagerschild mit einem Lagerzapfen aufweisenden Stirnseiten jeweils über ein Lager in einem Gehäuse pendelnd gelagert ist.

Um das Drehmoment einer Kraftmaschine mit einer elektrischen Motorbremsvorrichtung zu messen, wird das Reaktionsmoment über einen Hebelarm und eine Kraftmeßdose festgestellt. Bei bekannten elektrischen Motorbremsvorrichtungen ist der Stator der elektrischen Bremse pendelnd im Gehäuse über Wälzlager aufgehängt.

Diese Wälzlager dürfen, um ein Einschlagen zu verhindern, kein Lagerspiel aufweisen. Um das zu erreichen, werden sie üblicherweise axial vorgespannt. Durch die Axiallast entsteht ein Reibungsanteil, der sich als Hysteresisverlust beim Drehmomentmessen zeigt. Um diese Verluste zu verringen, wurden hydrostatische Lager für diese Pendellager bereits eingesetzt.

Die bekannten Ausführungen bestehen aus jeweils zwei Ringen, von denen der äußere festeht und der innere schwimmend ausgeführt ist. Gegen zu große Verdrehung ist ein Stift mit viel Spiel vorgesehen.

Axiale Kräfte werden durch Anlaufen des schwimmenden Ringes an die Gehäuseteile aufgenommen. Dabei entsteht wieder Reibung, die auf die Messung Einfluß nehmen kann.

Weiters ist bei dieser Lagerung durch das große Gewicht der Innenmaschine (Rotor und Stator) oder der gesamten Bremse (Rotor, Stator und Gehäuse) der Spalt unten kleiner als oben.

Aus dem oberen Bereich jedes Lagers fließt daher mehr Öl ab als aus dem unteren Bereich, was die erforderliche Ölmenge überflüssigerweise vergrößert.

Bei anderen bekannten Ausführungen von Motorbremsvorrichtungen sind hydraulische Kissen vorgesehen, die keinerlei axiale Kräfte aufnehmen können. Bei diesen werden die Axialkräfte einfach über einen prismatischen Körper, der in ein Ölbad taucht, am Gehäuse abgestützt. Hier wird ebenfalls das Meßergebnis durch den Reibungseinfluß verfälscht.

Aufgabe der Erfindung ist es, diese Nachteile zu vermeiden und eine Motorbremsvorrichtung der eingangs genannten Art derart weiterzubilden, daß das Meßergebnis von der Lagerung möglichst wenig beeinflußt wird.

Eine weitere Aufgabe der Erfindung ist es, die erforderliche Schmierölmenge zu verkleinern.

Erfindungsgemäß wird dies dadurch erreicht, daß die Lager hydrostatische Pendellager sind, wobei eines der beiden Pendellager als axial bewegliches Loslager und das andere als axial unbewegliches Festlager ausgeführt ist, und die Lager jeweils aus einem am Lagerzapfen des Lagerschildes aufgeschobenen Ring bestehen, welcher sich über zwei drehgesicherte Lagerkörper abstützt, die beidseitig einer die Wellenachse beinhaltenden Längsmittelebene und unterhalb einer zur Längsmittelebene normal stehenden, die Wellenachse beinhaltenden Querebene angeordnet sind, wobei jeder Lagerkörper aus einem Lagerkissen und einem mit dem Gehäuse fest verbundenen Stützkörper besteht, und wobei jeweils das Lagerkissen am Stützkörper kippbar und der Ring des Festlagers am Lagerkissen axial verschiebegesichert gelagert ist. Die Abstützung des Stators gegenüber dem Gehäuse erfolgt dabei lediglich über die zwei Lagerkörper. Eine Schmierung des Lagers ist daher nur in diesem Bereich erforderlich.

Vorzugsweise ist vorgesehen, daß die Lagerfläche zwischen Lagerkissen und Stützkörper jeweils kalottenförmig ausgebildet ist. Durch die damit erzielte kippbare Lagerung der Lagerkissen auf den Stützkörpern kann sich der Lagerspalt zwischen Ring und Lagerkörper selbsttätig gleichmäßig einstellen.

Ein eigener axialer Anschlag kann entfallen, wenn die Außenfläche des Ringes des Festlagers zumindest teilweise torusartige Gestalt aufweist und mit einer entsprechend geformten Kontaktfläche des Lagerkissens zusammenwirkt. Der Ring des Festlagers und die mit diesem Ring zusammenwirkenden Lagerkörper wirken selbstzentrierend, sodaß ein axialer Anschlag nicht erforderlich ist. Beim Auftreten von Wärmedehnungen der Innenmaschine kann sich diese frei ohne axiale Zusatzkräfte bewegen.

Die axiale Verschiebbarkeit des Stators gegenüber dem Gehäuse ist dadurch gegeben, daß die Außenfläche des Ringes des Loslagers sowie die Kontaktfläche des Lagerkissens zylindrisch geformt sind.

In Weiterbildung der Erfindung ist vorgesehen, daß die Lagerspalte des Lagers zwischen Ring und Lagerkissen jeweils über Kanäle im Lagerkissen und in Stützkörper und einer Drosselbohrung mit einem Druckölanschluß verbunden sind. Das Schmieröl kann dadurch fein dosiert nur in der erforderlichen Menge den eigentlichen Lagerbereichen zugeführt werden.

Die Erfindung wird anhand der Figuren näher erläutert. Es zeigen:
Fig. 1 und 2 eine elektrische Motorbremsvorrichtung mit Teilschnitten,
Fig. 3 eine Vorderansicht auf ein erfindungsgemäß ausgebildetes Festlager,
Fig. 4 einen Schnitt durch das Festlager,
Fig. 5 eine Teilansicht auf ein erfindungsgemäß ausgebildetes Loslager,
Fig. 6 ein Loslager,
Fig. 7 und 8 zwei Detailansichten eines Stützkörpers eines erfindungsgemäßen Lagers.

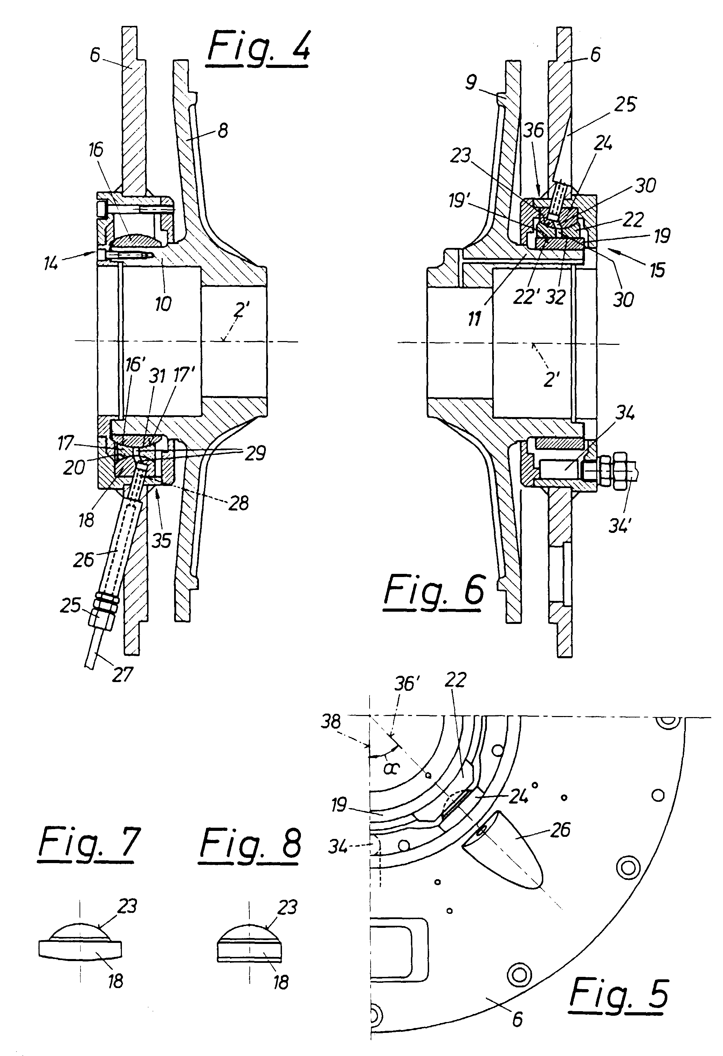

In Fig. 4 ist ein Lagerkörper um etwa 45° nach unten, in Fig. 6 ein Lagerkörper um etwa 135° nach oben, in die Zeichenebene gedreht.

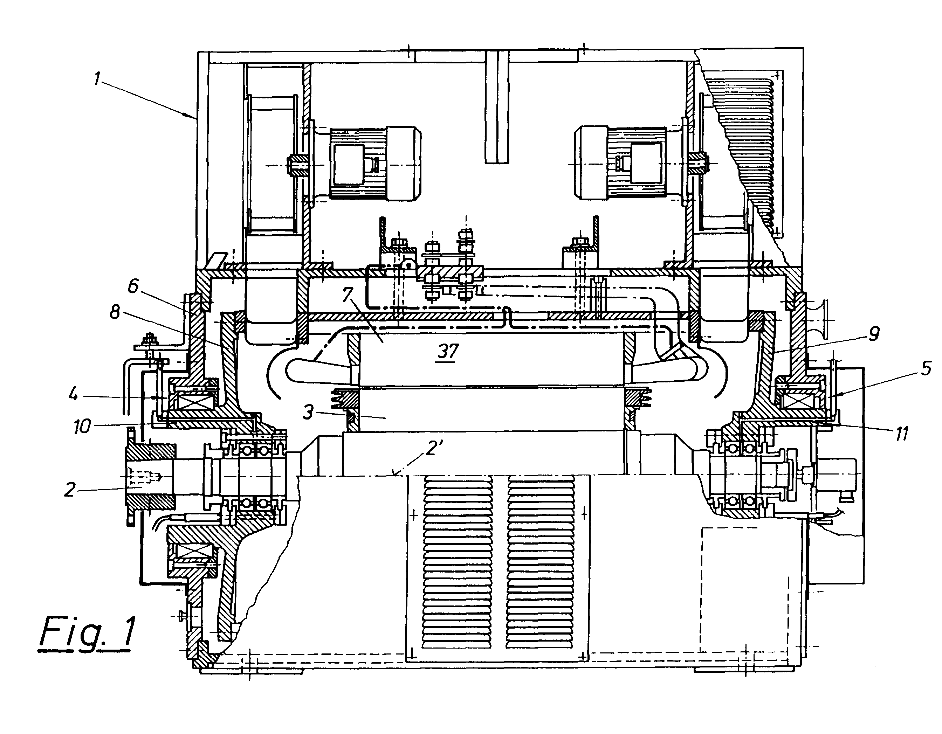

Fig. 1 zeigt eine elektrische Motorbremsvorrichtung 1 in Längsansicht mit Teilschnitten. Die Vorrichtung 1 besteht aus einem mit der Welle 2 umlaufendem Rotor 3 sowie einem über die schematisch angedeuteten Lager 4 und 5 im Gehäuse 6 gelagerten Stator 7. Im Bereich der Stirnseiten weist der Stator 7 scheibenartige Lagerschilde 8 und 9 mit Lagerzapfen 10 und 11 auf, welche sich über die Lager 4 und 5 am Gehäuse 6 abstützten.

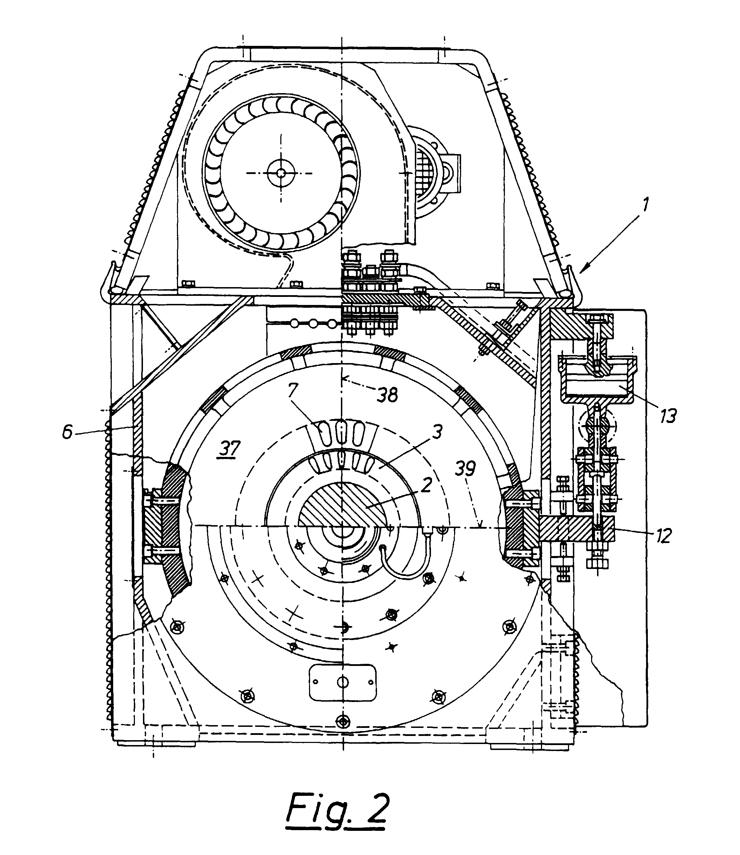

Wie in Fig. 2 ersichtlich ist, ist der Stator über einen Hebelarm 12 mit einer Kraftmeßdose 13 verbunden, um das Drehmoment zu messen.

Bei konventionellen Vorrichtungen sind die Lager 4 und 5 als Wälzlager ausgebildet.

Die erfindungsgemäße Lagerung für den Stator 7 sieht vor, daß die Lager 4 und 5 als hydraulische Pendellager ausgeführt sind, wobei das eine Pendellager 4 4 als Festlager 14 und das andere Pendellager 5 als Loslager 15 ausgeführt ist.

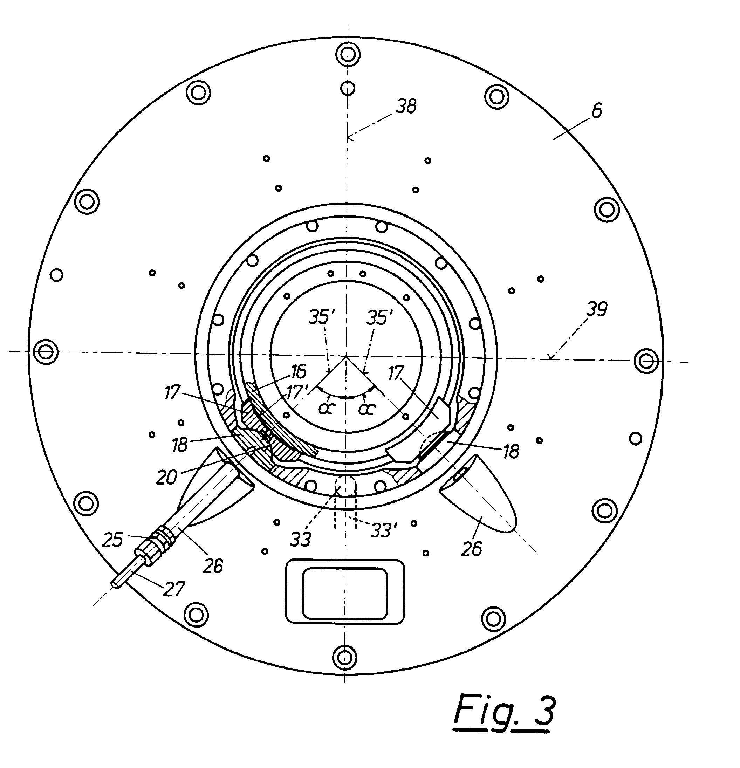

Wie in den Fig. 3 und 4 gezeigt ist, ist beim Festlager 14 über den Lagerzapfen 10 des Lagerschildes 8 ein Ring 16 aufgeschoben, welcher eine zum Teil torusartig gestaltete Kontaktfläche 16' aufweist. Über diese steht der Ring 16 in Kontakt mit entsprechend geformten Kontaktflächen 17' zweier Lagerkissen 17, welche über jeweils einen Stützkörper 18 am Gehäuse 6 der Bremsvorrichtung 1 abgestützt sind. Lagerkissen 17 und Stützkörper 18 bilden zusammen den Lagerkörper 35. Die Stützkörper 18 weisen eine kalottenförmig gestaltete Fläche 20 auf, auf der sich die Lagerkissen 17 kippbar in allen Richtungen selbsttätig einstellen können.

Beim in Fig. 5 und 6 dargestellten Loslager 15 ist analog zum Festlager 14 ebenfalls ein Ring 19 auf einen Lagerzapfen 11 des Lagerschildes 9 aufgeschoben. Dieser weist allerdings eine zylindrische Form auf und wirkt mit zylindrischen Kontaktflächen 22' der als Zylinder ausgeführten Lagerkissen 22 zusammen. Die Lagerkissen 22 sind wieder über Kalottenflächen 23 auf fest mit dem Gehäuse 6 verbundene Stützkörper 24 abgestützt und können sich durch Kippen in alle Richtungen selbsttätig einstellen. Beim Auftreten von Wärmedehnungen der aus Rotor 3 und Stator 7 bestehenden Innenmaschine 37 gegenüber dem Gehäuse 6 kann sich diese frei ohne axiale Zusatzkräfte bewegen.

Allfällige axiale Kräfte von außen werden am Festlager 14 über den torusförmigen Ring 16, die Lagerkissen 17 und die Stützkörper 18 am Gehäuse 6 abgefangen.

Eine durch die Wellenachse 2' und die Lagerkörper 35 bzw. 36 aufgespannte Ebene 35' bzw. 36' weist gegenüber der Längsmittelebene 38 einen Winkel α von etwa 45° auf.

Die Stützkörper 18 und 24 sind jeweils über Verschraubungen 26 am Gehäuse 6 niedergespannt.

Die Verschraubungen 26 können zugleich als Ölanschluß 25 ausgeführt sein. Das Drucköl wird über einen Ölanschluß 25 aus einem nicht näher dargestellten Druckölsystem über die Rohrleitungen 27 zugeführt und gelangt über eine Drossel 28 und Ölkanäle 29 und 30 in den Stützkörpern 18, 24 und den Lagerkissen 17, 22 zu den Lagerspalten 31, 32. Das aus den Lagerspalten 31, 32 austretende Öl wird im Gehäuse 6 an der tiefsten Stelle gesammelt und über jeweils einen Ölaustritt 33, 34 und eine Rohrleitung 33', 34' aus dem Festlager 14 bzw. dem Loslager 15 abgesaugt. Mit der Drossel 28 in jeder Verschraubung 26 wird sichergestellt, daß alle vier Lagerspalte 31, 32 gleichmäßig mit Öl versorgt werden.

Die Kontaktflächen 16', 19', 17', 22' zwischen den Ringen 16 bzw. 19 und den Lagerkissen 17 bzw. 22 bilden die eigentliche hydrostatische Lagerung. Durch die Last und den Ölfluß durch die Lagerspalte 31 und 32 stellt sich jeweils in den Lagerkissen 17 und 22 ein bestimmter Öldruck ein. Je nach Last wird der Lagerspalt 31 bzw. 32 größer oder kleiner und der Druck umgekehrt kleiner oder größer.

Durch die kippbare Lagerung der Lagerkissen 17 und 22 auf den Stützkörpern 18 und 24 kann sich der Lagerspalt 31 bzw. 32 am Ring 16 bzw. 19 immer gleichmäßig selbsttätig einstellen.

## Patentansprüche

1. Elektrische Motorbremsvorrichtung zur Messung des Drehmomentes einer Kraftmaschine mit einem mit einer Welle (2) umlaufenden Rotor (3) und einem Stator (7), welcher an seinen beiden jeweils einen scheibenförmigen Lagerschild (8,9) mit einem Lagerzapfen (10,11) aufweisenden Stirnseiten jeweils über ein Lager (14,15) in einem Gehäuse (6) pendelnd gelagert ist, **dadurch gekennzeichnet,** daß die Lager (14,15), hydrostatische Pendellager sind, wobei eines der beiden Pendellager als axial bewegliches Loslager (15) und das andere als axial unbewegliches Festlager (14) ausgeführt ist, und die Lager (14 , 15) jeweils aus einem am Lagerzapfen (10, 11) des Lagerschildes (8, 9) aufgeschobenen Ring (16, 19) bestehen, welcher sich über zwei drehgesicherte Lagerkörper (35, 36) abstützt, die beidseitig einer die Wellenachse (2') beinhaltenden Längsmittelebene (38) und unterhalb einer zur Längsmittelebene (38) normal stehenden, die Wellenachse (2') beinhaltenden Querebene (39) angeordnet sind, wobei jeder Lagerkörper (35, 36) aus einem Lagerkissen (17, 22) und einem mit dem Gehäuse (6) fest verbundenen Stützkörper (18, 24) besteht, und wobei jeweils das Lagerkissen (17, 22) am Stützkörper (18, 24) kippbar und der Ring (16) des Festlagers (14) am Lagerkissen (17) axial verschiebegesichert gelagert ist.

2. Motorbremsvorrichtung nach Anspruch 1, **dadurch gekennzeichnet,** daß die Lagerfläche zwischen Lagerkissen (17, 22) und Stützkörper (18, 24) jeweils kalottenförmig ausgebildet ist.

3. Motorbremsvorrichtung nach Anspruch 1 oder 2, **dadurch gekennzeichnet,** daß die Außenfläche (16') des Ringes (16) des Festlagers (14) zumindest teilweise torusartige Gestalt aufweist und mit einer entsprechend geformten Kontaktfläche (17') des Lagerkissens (17) zusammenwirkt.

4. Motorbremsvorrichtung nach einem der Ansprüche 1 oder 3, **dadurch gekennzeichnet,** daß die Außenfläche (19') des Ringes (19) des Loslagers (15) sowie die Kontaktfläche (22') des Lagerkissens (22) zylindrisch geformt sind.

5. Motorbremsvorrichtung nach einem der Ansprüche 1 bis 4, **dadurch gekennzeichnet,** daß die Lagerspalte (31, 32) des Lagers (14, 15) zwischen Ring (16, 19) und Lagerkissen (17, 22) jeweils über Kanäle (29, 30) im Lagerkissen (17, 22) und im Stützkörper (18, 24) und_einer Drosselbohrung (28) mit einem Druckölanschluß (25) verbunden sind.

## Claims

1. Electric braking device for measuring the torque of an engine, comprising a rotor (3) rotating with a shaft (2), and a stator (7), the latter being tiltably supported in a housing (6) by a bearing (14, 15) at either of it's front ends, each end being provided with a disk-shaped bearing shield (8, 9) with a pivot journal (10, 11), characterized in that hydrostatic swivel bearings are used, one of them being an axially movable bearing (15) and the other one an axially immovable bearing (14), and each bearing (14, 15) comprising a ring (16, 19) slipped over the pivot journal (10, 11) of the bearing shield (8, 9), which ring is supported by two bearing bodies (35, 36) secured against rotating, the latter being located one on either side of a longitudinal center plane (38) containing the shaft axis (2'), and below a transverse plane (39) containing the shaft axis (2') and being normal to the longitudinal center plane (38), each bearing body (35, 36) comprising a bearing pad (17, 22) and a supporting body (18, 24) permanently attached to the housing (6), and the bearing pad (17, 22) being tiltably supported by the supporting body (18, 24), and the ring (16) of the axially immovable bearing (14) being supported by the bearing pad (17) so as to be secured against axial shifting.

2. Braking device as in claim 1, characterized in that the bearing surface between bearing pad (17, 22) and supporting body (18, 24) is configured as spherical cap.

3. Braking device as in claim 1 or 2, characterized in that the outer surface (16') of the ring (16) of the axially immovable bearing (14) is at least partly torus-shaped and cooperates with a correspondingly shaped contact surface (17') of the bearing pad (17).

4. Braking device as in any of claims 1 or 3, characterized in that the outer surface (19') of the ring (19) of the axially movable bearing (15) and the contact surface (22') of the bearing pad (22) have a cylindrical shape.

5. Braking device as in any of claims 1 to 4, characterized in that the bearing gaps (31, 32) of the bearing (14, 15) between ring (16, 19) and bearing pad (17, 22) are connected with a connection (25) for pressurized oil via passages (29, 30) in the bearing pad (17, 22) and the supporting body (18, 24), and via a throttling port (28).

## Revendications

1. Dispositif de freinage à moteur électrique pour mesurer le moment du couple d'une machine motrice, comprenant un rotor (3) tournant avec un arbre (2) et un stator (7), qui est logé dans un logement (6) de manière oscillante, avec ses deux faces frontales chacune munie d'une flasque (8,9) de palier en forme de disque avec un tourillon (10, 11) dans chaque palier (14, 15), caractérisé en ce que les paliers (14, 15) sont des paliers hydrostatiques oscillants, en ce qu'un des deux paliers oscillants est un palier libre (15) qui peut se déplacer dans la direction axiale, en ce que l'autre palier est un palier fixe (14) qui ne peut pas se déplacer dans la direction axiale, en ce que les paliers (14, 15) comportent chacun une bague (16, 19) entourant le tourillon (10, 11) de palier de flasque (8, 9) de palier, cette bague étant soutenue par des corps (35, 36) de paliers fixes en rotation qui sont positionnés de part et d'autre d'un plan médian longitudinal (38) contenant l'axe (2') de l'arbre et en dessous d'un plan transversal (39) contenant l'axe (2') et perpendiculaire au plan médian longitudinal (38), en ce que chaque corps (35, 36) de palier est composé d'un coussin (17, 22) de palier et d'un corps de soutien (18, 24) fixé rigidement sur le logement (6), en ce que chaque coussin (17, 22) de palier est inclinable par rapport au corps de soutien (18, 24) et en ce que la bague (16) du palier fixe (14) est immobilisée dans la direction axiale sur le coussin du palier (17).

2. Dispositif de freinage à moteur électrique selon la revendication 1, caractérisé en ce que la surface de palier entre les coussins (17, 22) de palier et les corps de soutien (18, 24) ont chacun la forme d'une calotte.

3. Dispositif de freinage à moteur électrique selon la revendication 1 ou 2, caractérisé en ce que la surface externe (16') de la bague (16) du palier fixe (14) présente au moins une partie de forme torique et coopère avec une surface de contact (17') du coussin (17) de palier formée de manière correspondante.

4. Dispositif de freinage à moteur électrique selon la revendication 1 ou la revendication 3, caractérisé en ce que la surface externe (19') de la bague (19) du palier libre (15) et la surface de contact (22') du coussin (22) de palier ont une forme cylindrique.

5. Dispositif de freinage à moteur électrique selon l'une des revendications 1 à 4, caractérisé en ce que les espacements (31, 32) des paliers entre les bagues (16, 19) et les coussins (17, 22) de paliers sont chacun en communication par un canal (29, 30) dans le coussin (17, 22) de palier et dans le corps de soutien (18, 24) et par un orifice d'étranglement (28) avec une alimentation (25) d'huile sous pression.
